(19) Europäisches Patentamt / European Patent Office / Office européen des brevets

(11) **EP 3 585 495 B1**

(12) **EUROPEAN PATENT SPECIFICATION**

(45) Date of publication and mention
of the grant of the patent:
**06.12.2023 Bulletin 2023/49**

(21) Application number: **18708344.9**

(22) Date of filing: **15.02.2018**

(51) International Patent Classification (IPC):
**B01D 15/18** $^{(2006.01)}$    **B01D 15/20** $^{(2006.01)}$
**G01N 30/60** $^{(2006.01)}$

(52) Cooperative Patent Classification (CPC):
**B01D 15/1864; B01D 15/1814; B01D 15/20;**
**G01N 30/6034;** B01D 15/1821; G01N 30/74

(86) International application number:
**PCT/EP2018/053845**

(87) International publication number:
**WO 2018/153776 (30.08.2018 Gazette 2018/35)**

(54) **A METHOD IN CONTINUOUS CHROMATOGRAPHY**

VERFAHREN IN DER KONTINUIERLICHEN CHROMATOGRAFIE

PROCÉDÉ EN CHROMATOGRAPHIE CONTINUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.02.2017 GB 201702856**

(43) Date of publication of application:
**01.01.2020 Bulletin 2020/01**

(73) Proprietor: **Cytiva Sweden AB**
**751 84 Uppsala (SE)**

(72) Inventors:
• **SICHTING, Martin**
**79111 Freiburg (DE)**
• **BERG, Mikael, Johan Helmer Eugen**
**751 84 Uppsala (SE)**
• **BLOM, Hans**
**751 84 Uppsala (SE)**

(74) Representative: **Démoulin, Eva Lotta**
**Cytiva Sweden AB**
**Björkgatan 30**
**751 84 Uppsala (SE)**

(56) References cited:
WO-A1-2008/153472    WO-A1-2015/144481
US-A- 3 422 003    US-A- 5 071 547
US-A1- 2009 247 806    US-A1- 2016 074 775

# EP 3 585 495 B1

**Description**

TECHNICAL FIELD

The present invention relates to a flow-through chromatographic method for purifying a target product in a flow-through chromatography system as defined in claim 1. The present invention also relates to a flow-through chromatography system.

BACKGROUND

An important factor in flow-through process chromatography is binding capacity of a chromatography column for the impurities. The binding capacity directly influences the productivity and cost of the chromatography step. The binding capacity is defined either in terms of dynamic/breakthrough capacity or as the maximum binding capacity. The dynamic capacity depends on the conditions at which the impurities flows through a column packed with chromatography medium, and may be represented as a ratio between column volume and feed flow rate, a so called residence time. The maximum binding capacity represents a breakthrough capacity of the column if the residence time was infinitely long.

An initial breakthrough capacity is defined as the amount of binding impurities taken up by a column at the point when the impurities are first detected in the effluent. The breakthrough capacity can also be defined as a capacity at a given percentage of breakthrough, where the percentage represents the amount of binding impurity present in the effluent from the column, expressed in percent of the impurity present in the feed. According to this definition the maximum binding capacity will be equal to breakthrough capacity at 100% of breakthrough, i.e., at the point where no more impurity can bind to the column. Therefore, in order to determine maximum capacity, the breakthrough capacities are measured at different levels of breakthrough, where the levels are defined by levels of concentration of impurities measured in the effluent from the column during sample loading.

Often these concentrations are determined by continuously monitoring a signal in a flow through a breakthrough detector placed in the effluent line. The plot of these concentrations (signal) against time (or volume or mass loaded) is called a breakthrough curve. Location of the breakthrough on a chromatogram and its shape is related to how much impurity the column is capable of binding and how quickly all adsorption sites are saturated with the impurity. It also shows how much more impurity can be bound to the column at any given time.

Breakthrough binding capacity for the impurity is, in the presence of the solute, one of the most critical parameters to optimize when developing a purification protocol. Because solutes often have similar light adsorbing properties as the impurity determination of binding breakthrough capacities is a tedious and laborious work. In a typical experiment effluent from the column is collected in series of fraction, which are subsequently analysed using high resolution analysis techniques for the product in question, such HPLC, biological assays, ELISA, mass spectrometry, etc. Thus the determination of binding capacities for a chromatography column is rather complicated and in cases where the feed solution concentration is randomly varying during the feed application onto a chromatography column the true breakthrough capacities are close to impossible to measure accurately.

Accurate measuring is important if one wants to operate a column at the optimum process conditions. For instance, it can be shown that under certain conditions a maximum productivity of a flow-through chromatography step is obtained when the impurity of interest reaches a certain value of its concentration in the column effluent, for instance a 10% of its initial concentration. If the breakthrough capacity is determined according to the method described above, it is impossible to terminate loading of the column at exact 10% breakthrough if either feed concentration or process conditions, including flow rate and/or chromatography media properties, vary with time in unpredictable manner.

Furthermore, accurate determination of breakthrough capacities at different levels of breakthrough under varying process conditions is also important in the case of continuous chromatography. Continuous chromatography can be realised by a system operating using simulated moving bed technology, wherein the connections between the columns is changed to facilitate a continuous feed of sample into the system. However, continuous chromatography may also be realised using moving bed technologies, wherein the columns are moved to facilitate continuous feed of sample.

In continuous chromatography, several identical, or almost identical, columns are connected in an arrangement that allows columns to be operated in series and/or in parallel, depending on the method requirements. Thus, all columns can be run in principle simultaneously, but with the method steps shifted in time. The procedure can be repeated, so that each column is loaded, cleaned, and regenerated several times in the process. Compared to 'conventional' chromatography, wherein a single chromatography cycle is based on several consecutive steps, such as: sample loading, strip, Clean-In-Place (CIP) and re-equilibration, before the column may be used for another batch, in continuous chromatography based on multiple identical columns all these steps occur simultaneously but on different columns each.

Continuous chromatography operation results in better utilization of chromatography resin, reduced processing time and reduced buffer requirements, all of which benefits process economy.

Continuous chromatography may be exemplifed as a periodic counter current process, because periodically all the chromatography columns comprising the system are simultaneously moved in the direction opposite to the sample flow. The apparent movement of the columns is realized by appropriate redirections of inlet and outlet stream to/from the columns.

Historically, essential factors for a reliable continuous process are:

1) the quality of the columns used, and more specifically the similarity or even identity between columns,
2) constant feed composition, and
3) hardware reliance, for instance constant flow rate delivered by pumps, valve functionality, etc.

If the columns are not identical, the theoretical calculations typically used to design continuous chromatography process will not be correct, and it will become difficult to design an efficient and robust continuous chromatography process. The same argument applies if feed concentration and flow rates vary with time in an unexpected manner.

Therefore, for scale-up considerations, having identical columns, reliable pumps in the system is essential. However, the packing of a column with a chromatography media is very complex in order to obtain repeatable results. Even small differences in the number of plates or other packing properties can have a huge effect on the end result. Furthermore, since capacities of chromatography resins typically change during resins lifetime/usage the process conditions chosen for a fresh resin may not be applicable for a resin that has been used for several times. In addition, if the feed solution concentration, and thus the impurity concentration, varies with time it will be even more complicated to design an efficient continuous chromatography process that would operate at its optimum all the time.

An example of continuous chromatography, configured to operate with three or four columns, is ÄKTA™pcc 75 produced by GE Health Care (description available from www.gelifesciences.com/AKTA).

In case when a predetermined amount of impurities are detected in the effluent of a column during flow-through chromatography, e.g. using dynamic control, the detection will trigger a stop of loading feed into the column. In other cases, when no sensor is available to detect impurities in the effluent, the sample loading continues for a predetermined time and then the column is disconnected from the feed source. Thereafter, the remaining volume of the partly purified feed in the column is disposed as waste and the column is cleaned and reconditioned to receive feed for future processing. As a consequence, a part of the feed material which is purified compare to the original feed material is wasted. Thus, there is a need to introduce a process for improving the efficiency of the flow-through chromatography process to avoid wasting feed material.

Prior art is: WO 2008/153472A1 to GE HEALTHCARE BIO SCIENCES AB; WO 2015/144481A1 to GE HEALTHCARE BIO SCIENCES AB and US 2016/074775A1 to CVETKOVIC ALEKSANDAR.

SUMMARY

An object of the present disclosure is to provide methods and devices configured to execute methods and computer programs which seek to mitigate, alleviate, or eliminate one or more of the above-identified deficiencies in the art and disadvantages singly or in any combination.

The object is achieved by a method for purifying a target product in a flow-through chromatography system comprising at least a first column loaded with feed material from a feed source. The at least first column is purged after binding of impurities and wherein the outlet of purged material from the column is subsequently passed to the feed source.

An advantage is that partly purified feed material which is residing within the column when impurity breakthrough is reached may be recirculated to the feed source without being wasted.

Another advantage is that the efficiency of the process and the utilization of the feed material is increased compared to prior art methods.

Further objects and advantages may be obtained from the detailed description by a skilled person in the art.

BRIEF DESCRIPTION OF THE DRAWINGS

Fig. 1 illustrates an overview of a bioprocess purification system designed to purify a target product using continuous chromatography.
Fig. 2 illustrates a continuous flow-through chromatography with an arbitrary number of columns, based on a simulated moving bed technology.
Figs. 3a-3c illustrate the principle of three column flow-through chromatography.
Figs. 4a-4d illustrate capacity utilization for conventional batch chromatography operation compared to multi-column flow-through chromatography operation.
Fig. 5 illustrates an overview of two-step breakthrough in continuous chromatography.

Fig. 6 illustrates UV signal detectors used for dynamic control in continuous chromatography.

Figs. 7a-7b illustrate an embodiment of a single column flow-through chromatography system.

Fig. 8 illustrates a two column flow-through chromatography system.

Figs. 9a-9h illustrate the principle of a four column flow-through chromatography.

DETAILED DESCRIPTION

The term "feed" refers to a liquid which contains two or more compounds to be separated. In this context, the term "compound", or "product" , is used in a broad sense for any entity such as a molecule, chemical compound, cell etc.

The term "target compound", or "target product" means herein any compound which it is desired to separate from a liquid comprising one or more additional compounds. Thus, a "target compound" may be a compound desired e.g. as a drug, diagnostic or vaccine; or, alternatively, a contaminating or undesired compound which should be removed from one or more desired compounds.

The term "break-through" means the point of time during feed addition to an adsorbent such as packed chromatography column when the undesired compound, or impurities, adsorbed first appears in the outflow. In other words, in a flow-through process, the "break-through" is the point of time when contamination of target compound begins in the outflow from the column.

The term "saturation level" means the point of time when an adsorbent such as a packed chromatography column retains only a part of its original capacity to adsorb an undesired compound or impurities.

The term "full saturation" means the point in time when an adsorbent such as a packed chromatography column is not able to adsorb any more of an undesired compound or impurities.

The term "regeneration" means herein a process of treating an adsorbent to make it useful again in chromatography. Thus, "regeneration" will include release of bound undesired compounds or impurities as well as re-equilibration with the appropriate adsorption buffer. As will be discussed below, "regeneration" may also include cleaning in place (CIP).

The term "purge" means herein a process of treating an adsorbent, such as a chromatography column, with a suitable liquid to remove e.g. one or more target compounds that remain in the chromatography column after the feed has been disconnected at a desired saturation level.

The term "resins" means a resin used for removal of impurities from feed streams in flow through applications often, but are not limited to, include ion exchange or multimodal type of resins.

The term "capture" means in the context of a chromatography method the first chromatography step, wherein a large amount of target compound is captured or, for a flow-through process, a large amount of impurities is captured.

The term "flow-through" means in the context of a chromatography method the first chromatography step, wherein a large amount of undesired compound, or impurity, is captured and the target compound flows through the column.

Continuous chromatography in flow through mode can be used for removal of impurities during purification of target products (such as viruses, viral vectors, virus like particles (VLP:s), plasmids and similar vaccine typ molecules, but also for mabs and recombinant proteins, biomolecules from cell culture/fermentation, natural extracts) in continuous downstream processes using periodic counter current chromatography, as explained in background section. The technology employs three or four chromatography columns to create a continuous purification step. The columns are switched between loading and non-loading steps, such as wash. Continuous chromatography supports process intensification by reducing footprint and improving productivity. In addition, continuous chromatography is especially suited for purification of unstable molecules, as the short process time helps to ensure stability of the target product.

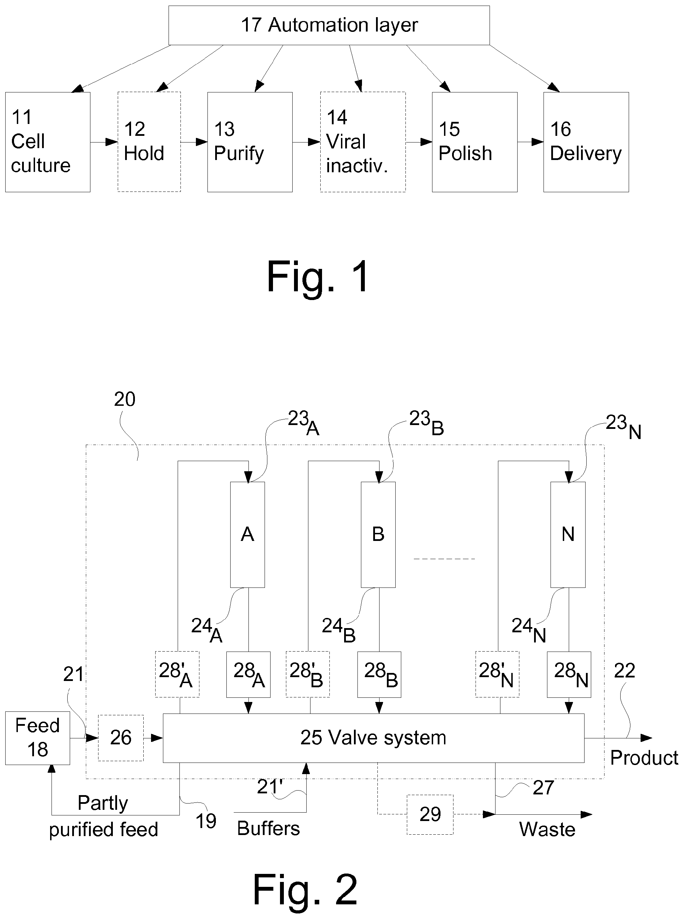

In figure 1, an overview of a bioprocess purification system, configured to purify a target product using a separation process is shown. The bioprocess purification system comprises a number of steps related to Cell culture 11, Hold 12, Purify 13, Viral inactivation 14, Polish 15 and Delivery 16.

In a fully continuous process the cell culture step 11 may be a perfusion type culture which comprises continuous addition of nutrients for cell growth in perfusion culture and continuous removal of product and waste through drain and filtration. E.g. using an Alternate Tangential Filtration( ATF) filter. The step may comprise process control for viable cell density (VCD), and the next step in the process starts when VCD reaches a pre-determined value. The VDC may be controlled by adapting the components of the cell culture media fed to the culture or by addition of certain components directly to the culture. Alternatively, the cell culture is of batch type.

The sample containing the target product is exploited in a cell free extraction process, e.g. by filtration, centrifugation or another technique.

The hold step 12 is an optional step depending on process needs, e.g. if a filter is in-line before purify step 13. The step may comprise process control on weight, and the next step in the process starts when a pre-determined volume value is reached, or alternatively after a certain time period or when a pre-determined mass is reached. The hold step may be used both for collecting a volume of filtered feed from a perfusion cell culture or from a batch culture.

The purification step 13 comprises preferably a continuous chromatography that may have a filter in-line before the purify step. The continuous chromatography may be run as periodic counter current chromatography with a continuous feed of sample from the cell culture step 11, directly or via the hold step 12, containing the target product. In one embodiment, the target product is obtained from a flow-through process. In another embodiment, the target product is obtained by eluting captured target product. Furthermore, the purify step may comprise multiple batch elutions or multiple batch flow-through processes, and process control using in-line UV-sensors handles variation in feed concentration and resin capacity. The next step starts when a pre-determined amount value (e.g. volume, mass or time) is reached.

In the optional viral inactivation step 14, different options for virus inactivation is available depending on process needs. One option is to use batch mode with low pH for 30-60 minutes in hold up tank. The step may comprise process control on volume, time, temperature and pH. The next step starts when a pre-determined time is reached. When for instance an active virus is the desired target product, the viral inactivation step 14 is omitted.

The polish step 15 may be straight through processing (STP), i.e. a flow-through process, with a connected batch step or continuous chromatography with a continuous load step, or a combination thereof. The step may comprise process control for UV, flow and volume, and the next step starts when a pre-determined volume and amount is reached, alternatively when a timeout is reached.

The delivery step 16 may comprise a virus removal step, e.g. a viral filter, before an ultrafiltration step. The delivery step may be used as concentration step for batch addition of sample from polish step. The delivery step may comprise continuous or batch delivery of product and may comprise continuous or batch removal of waste. The step may comprise process control for pH, conductivity, absorbance, volume and pressure, and delivery is achieved when a pre-determined product concentration in a pre-defined environment is reached.

An automation layer 17 is used for handling decision points for next step in the process. Different type of sensors (not shown), both in-line sensors and off-line sensors, are integrated into the process flow to monitor different parameters that may be used for providing the automation layer 17 with data that could be used to handle the decision points. Sensors include but are not limited to only measure flow, VCD, weight, pressure, UV, volume, pH, conductivity, absorbance, etc.

It should be noted that UV is an example of a parameter that could be monitored to detect the composition of the sample being purified. However, other parameters may be used operating in other frequency ranges, such as IR, fluorescence, x-rays, etc.

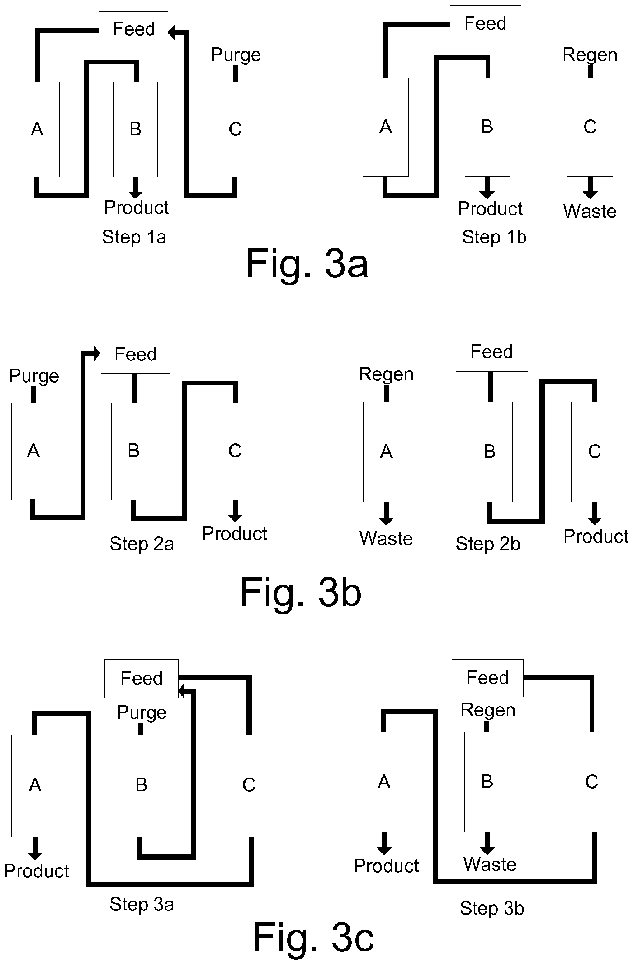

As previously mentioned the purify step 13 and/or the polish step 15 may comprise a continuous chromatography 20, as illustrated in figure 2. Feed material 18 containing the target product is fed into the continuous chromatography 20 via inlet 21 and the target product is available at outlet 22. The continuous chromatography 20 comprises multiple columns A, B,...,N, and each column is provided with a column inlet 23 and column outlet 24. The column inlet 23 and column outlet 24 of each column is connected to a valve system 25 configured to connect the columns cyclically to the inlet 21 and the outlet 22 to achieve continuous purification of the target product. Example of a system configuration having three columns is described in connection with figures 3a-3c.

The continuous chromatography 20 is further provided with buffer inlet 21' and waste outlet 27 in order to be able to perform the required operations. An in-line sensor 28 may provide after the column outlet 24 of each column or be assigned to the process flow and integrated into the valve system 25. Important parameters, such as UV, is measured to control the process, as described below. Another in-line sensor 28' may be provided before the column inlet 23 of each column in order to be able to directly evaluate performance of each column. An in-line inlet sensor 26 may also be provided to monitor the composition of the feed material fed into the continuous chromatography 20

The continuous chromatography may also comprise off-line sensors 29, which are designed to extract material from the process and thereafter evaluate selected parameters before the material is disposed of as waste.

In addition, the valve system 25 is provided with a purge outlet 19, which is configured to pass partly purified feed material back to the feed 18. The partly purified feed material is provided by recirculating it from columns that have reached the breakthrough point for impurities, as exemplified in figures 3a-3c. In the present disclosure, the purge outlet 19 is schematically shown to be connected to the feed 18, but the purge flow from one column may in other embodiments be combined with the feed flow 21 in other ways or be loaded directly onto the column receiving the feed in the subsequent cycle.

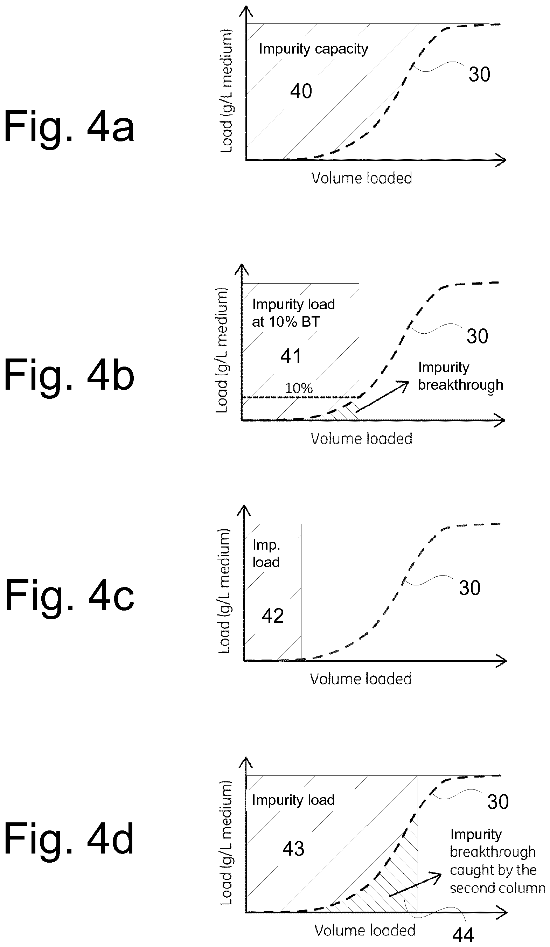

The principle behind the continuous flow-through chromatography is to keep at least two columns in the loading zone which allows for overloading of the first column without risk of impurities in the product, as the breakthrough of impurities will be caught by downstream columns, as described in connection with figures 4a-4d.

The continuous flow-through chromatography comprises at least three columns and the principle of operations in a three columns (3C) setup is described in connection with figures 3a-3c. The 3C setup features two parallel flows: one for loading of the two columns in the loading zone, and one for the non-loading steps, e.g. purging and regeneration of the third column.

In figure 3a, illustrating step 1a and 1b, column A and B are in the loading zone. Feed material is provided from the feed and column A can be overloaded without contaminating the product, as column B catches the impurity breakthrough from column A. In this way, the utilization of the resin binding capacity is maximized. The product flows through column A and B and is available from the outlet of column B. Column C, which is overloaded to the point of breakthrough with impurities, also contains a volume of partly purified feed material that is passed to the feed, as illustrated in step 1a. Step 1b illustrates the situation when the partly purified feed material has been purged from the column and passed back to the feed whereafter column C is reconditioned.

In figure 3b, illustrating step 2a and 2b, the overloaded column A is switched and column B becomes the first column and column C becomes the second column in the loading zone. The product flows through column B and C and is available from the outlet of column C. The overloaded column A will now be subjected to the non-loading steps, such as purging partly purified feed material (step 2a) and regenerating (step 2b).

In figure 3c, illustrating step 3a and 3b, the overloaded column B in the loading zone is switched. Now column C becomes the first column and column A the second column in the loading zone, while column B is subjected to purging (step 3a) and regenerating (step 3b). These steps are repeated in a cyclic manner until required target product volume, mass or amount is reached (or until resin lifetime is reached and columns needs to be repacked or exchanged).

The continuous flow-through chromatography illustrated in figure 2 may utilize more than three columns, and in a four column (4C) setup, the same principle applies. However, the non-loading steps may become limiting in a 3C setup, and the non-loading steps can be split on two columns and run in parallel utilizing a third flow path in the 4C setup. The 4C setup allows for balancing the loading and non-loading steps. More columns will lead to a more flexible system, while the complexity of the valve system 25 becomes increasingly complicated. However, some continuous chromatography have sixteen or more columns.

Figures 4a-4b illustrate capacity utilization for conventional batch chromatography operation compared to multi-column flow-through chromatography operation. Figure 4a illustrates the total available impurity capacity 40 of a chromatography resin and impurity breakthrough curve is indicated by 30. As is apparent from the graph, when a small volume is loaded the impurity will be captured in the resin, but at large volumes a substantial part of the impurities will breakthrough and contaminate the product in a batch operation.

Figure 4b illustrates the sample load 41 at 10% impurity breakthrough. The product below the breakthrough curve 30 will be wasted if not reused in another column. The impurity capacity 42 typically used in batch operations is illustrated in Figure 4c, and impurity capacity 43 used in continuous chromatography is illustrated in figure 4d. Note that the impurity breakthrough 44 is captured by the columns downstream in the loading zone.

Dynamic control functionality, which allows for variations in feed composition, may be implemented in continuous chromatography. The principle of dynamic control is based on the relative difference in UV signals before and after each column at breakthrough. The difference between the baseline UV and the UV signal at 100% breakthrough for a saturated column is defined as $\Delta UV_{max}$, wherein $\Delta UV$ is calculated using equation (1)

$$\Delta UV = 100 \times \frac{UV_{BT} - Baseline}{UV_{sample} - Baseline} \qquad (1)$$

where $\Delta UV$ = difference in UV280 nm signal between impurities and antibody (%)

$UV_{BT}$ = UV280 nm value determined at a point during impurity breakthrough (mAu)

Baseline = UV280 nm value of antibody and media prior to impurity breakthrough (mAu)

and $UV_{Sample}$ = UV280 nm value of impurities, media, media components, and antibody (mAu)

The UV absorbance before the first column in the loading zone (i.e. $UV_{Sample}$) will reflect the total UV absorbance in the loaded material, including antibody, Host Cell Proteins (HCP), DNA and media components. The UV absorbance after the first column (i.e. $UV_{BT}$) will initially, as long as no breakthrough has occurred, reflect only the product (i.e. the antibody in this example). The UV absorbance from the background is defined as the baseline level. The level of breakthrough is measured as the relative difference in percentage (% $\Delta UV$), between the baseline and the level at which the column is saturated and all impurities (i.e. Host Cell Proteins (HCP), DNA and media components) passes through the column.

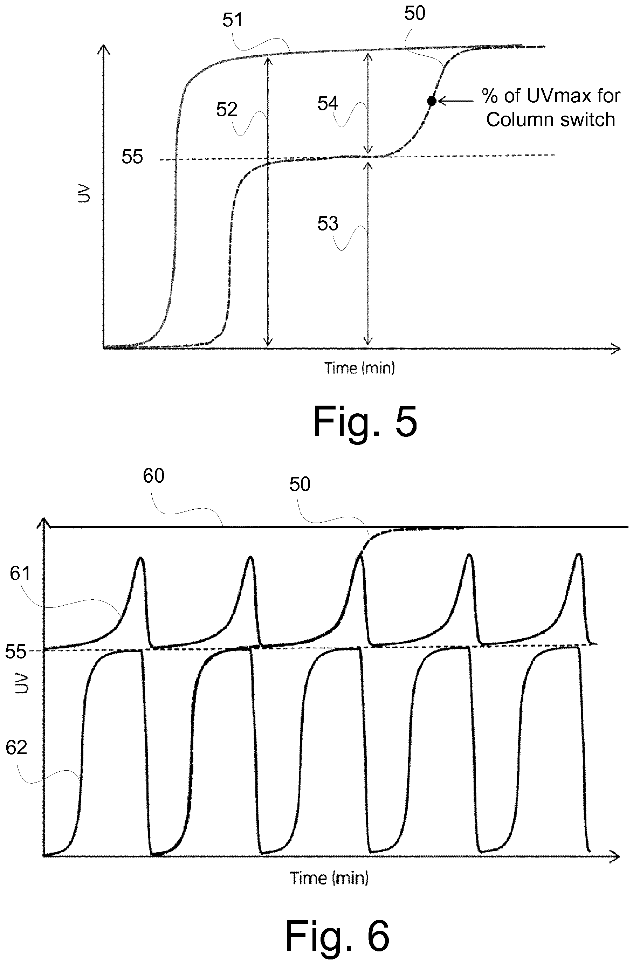

Figure 5 illustrates the two-step breakthrough, displaying the central UV signals used for dynamic control. Curve 50 shows the $UV_{BT}$ (i.e. the post column impurity breakthrough curve), curve 51 shows the $UV_{sample}$ (i.e. the pre column feed line), and reference numeral 55 indicates the baseline. Reference numeral 52 indicates total signal from target product and impurities in the sample being fed into the column, reference numeral 53 indicates signal from target product (background), and reference numeral 54 indicates $\Delta UV_{max}$ (signal from impurity).

The difference between the baseline UV 55 and the UV signal at 100% impurity breakthrough for a fully loaded column is defined as $\Delta UV_{max}$, where the desired level is process-dependent. A continuous flow-through chromatography may use UV detectors assigned to the process stream and not to the separate columns. Hence, each breakthrough curve may be generated based on signals from two UV detectors as illustrated in figure 6.

The breakthrough curve (dashed curve 50) and the baseline 55 are the same as shown in figure 5. Curve 60 is UV of the sample fed into the column, curve 61 is UV of the impurity breakthrough after the column and curve 62 is UV of the target product.

The $\Delta$UV may be set to 1-70% after the first column, since the impurities will be captured in the second column and the efficiency of the system increases.

Whenever the detected impurity level (i.e. $\Delta$UV is higher than a predetermined impurity breakthrough) the column is disconnected from the feed source and a volume of partly purified feed material is still occupying the disconnected column. In order to prevent unnecessary wasting of feed material, the partly purified feed material inside the column is purged using a purging buffer and passed to the feed source before the column is reconditioned.

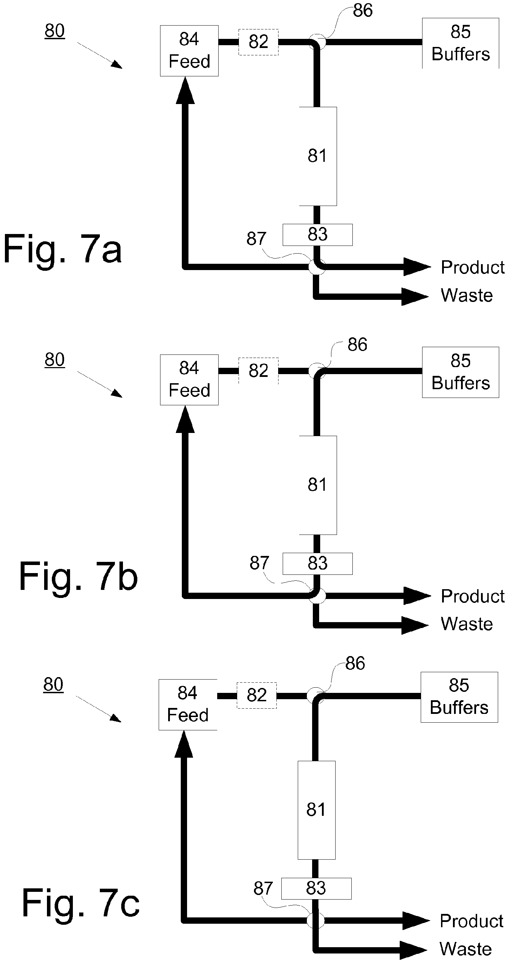

Figure 7a-7c illustrate a single column flow-through chromatography system 80 during loading (Figure 7a), purging (Figure 7b) and regenerating (Figure 7c). The system 80 comprises a column 81 having an outlet sensor 83 arranged downstream the column 81 and an optional inlet sensor 82 upstream the column between the feed source 84 and the inlet of the column. The system also comprises inlet valve 86 and outlet valve 87 configured to switch the column between different mode of operations as illustrated in figures 7a-7c.

In figure 7a, loading is illustrated and the feed source 84 is connected via the optional sensor 82 and the inlet valve 86 to the inlet of the column 81. The feed material is purified from impurities in the column (flow-through processing) and the product is available from the outlet of the column and transported via the sensor 83 and the outlet valve 87 to be delivered. When a predetermined impurity breakthrough is detected by the outlet sensor, e.g. a UV sensor, pH sensor or conductivity sensor, the feed source is disconnected from the inlet of the column and the position of the outlet valve 87 is changed to prevent contamination of product output.

The optional inlet sensor, e.g. a UV sensor, may be used to perform the dynamic control described above to more accurately determine when to disconnect the column 81 from the feed source 84.

In figure 7b, purging is illustrated after the feed source 84 has been disconnected and a buffer suitable for purging the column is connected by changing the position of the inlet valve 86. The changed position of the outlet valve 87 facilitates recirculation of the purged partly purified feed material which is occupying the column after being disconnected from the feed source 84. When the partly purified feed material has been purged from the column 81 and passed to the feed source 84, the position of the outlet valve 87 is changed to connect the outlet of the column 81 to the waste.

In figure 7c, regenerating is illustrated after the outlet valve has connected the outlet of the column 81 to the waste. A buffer suitable for cleaning and regenerating the column 81 is introduced via the inlet valve 86 into the column 81, and via the outlet valve 87 to the waste. This type of single column flow-through chromatography system may be used as a polishing step in the process described in connection with figure 1.

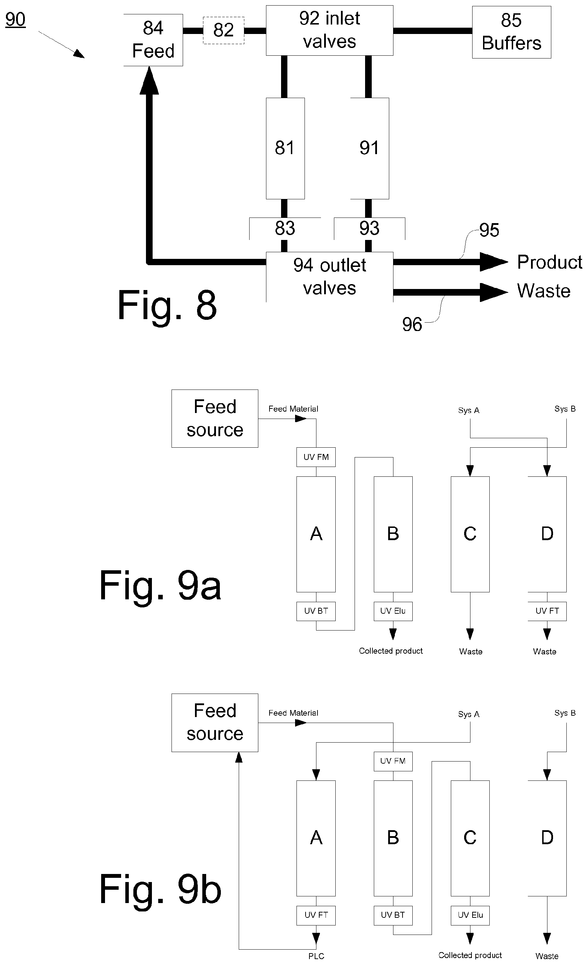

Figure 8 illustrates a two column flow-through chromatography system 90. The system comprises similar components as the single column system described in connection with figures 7a-7c. Identical features have the same reference numerals and functionality. A second chromatography column 91 has been introduced in the system.

Column 81 and column 91 are connected to inlet valves 92, replacing the inlet valve 86 in figures 7a-7c. Column 81 and column 91 are also connected to outlet valves 94, replacing the outlet valve 87 in figures 7a-7c. Inlet valves 92 and outlet valves 94 provide the desired functionality to the system as described below.

When the first column 81 is loaded with feed material from the feed source 84, the target product is available at the system outlet 95 until a predetermined impurity breakthrough is detected using sensor 83. During loading of the first column, the second column 91 is waiting to be loaded (if the column is new and has not been loaded before) or partly purified feed material inside the second column is purged using a purging buffer and passed to the feed source 84. The second column is thereafter regenerated using a regenerating buffer which is directed to the waste 96.

When the predetermined impurity breakthrough is detected using sensor 83, the first column is disconnected from the feed source and feed material is directed to the second column 91. Partly purified feed material contained inside the first column is purged using a purging buffer and passed to the feed source 84. The second column is loaded until a predetermined impurity breakthrough is detected using sensor 93 and target product is available at system outlet 95. During loading of the second column, the first column is also regenerated using a regenerating buffer which is directed to the waste 96 after the partly purified feed material has been passed to the feed source 84.

When the predetermined impurity breakthrough detected using sensor 93, the second column 91 is disconnected from the feed source 84 and feed material is directed to the first column 81 and loading of the first column 81 commences.

This process is repeated by controlling the inlet valves 92 and outlet valves 94, and a more or less continuous output of target product may be obtain at system outlet 95, since purging and regenerating a column takes less time than loading a column.

Alternatively, the two column flow-through chromatography system 90 comprises an interconnection flow path between outlet valves 94 and the inlet valves 92, and said valves 92 and 94 are arranged to allow the outlet from either one of the two columns 81 and 91 to be directed to the inlet of the other column. In this embodiment, the two columns may be operated much like the system of fig. 3 but in a 2 column PCC mode where the purging and regeneration steps on one column are performed while the feed is directed to the other column and preferably before the other column has reached its initial point of breakthrough.

Figures 9a-9h illustrate the steps in a flow-through continuous chromatography system with four columns A-D. The sensors in the system are exemplified as UV sensors and only the used sensors are shown and the functionality of each is indicated in each figure.

UV FM - UV sensor for Feed Material

UV BT - UV sensor for Breakthrough

UV Elu - UV sensor for the eluted target product

UV FT - UV sensor for Flowthrough

Figure 9a illustrates a first main step in the process, where feed material is loaded into a first column A and at least partly purified feed material flow through the first column after binding of impurities and wherein the partly purified feed material from the first column A is subsequently passed onto a second column B for binding of impurities in the partly purified feed material. Purified material is collected from the second column B. A third column C is regenerated and a fourth column D is washed.

Figure 9b illustrates the post load recirculation (PLR) step which commences when the first column is disconnected after a predetermined impurity breakthrough is detected, e.g. 10% BT. Purging buffer "Sys A" is used to purge partly purified feed material from column A and pass it back to the feed source. The second column B is now loaded with feed material and the partly purified feed material from the second column B is subsequently passed onto the third column C for binding of impurities in the partly purified feed material. Purified material is collected from the third column C. The fourth column D is regenerated.

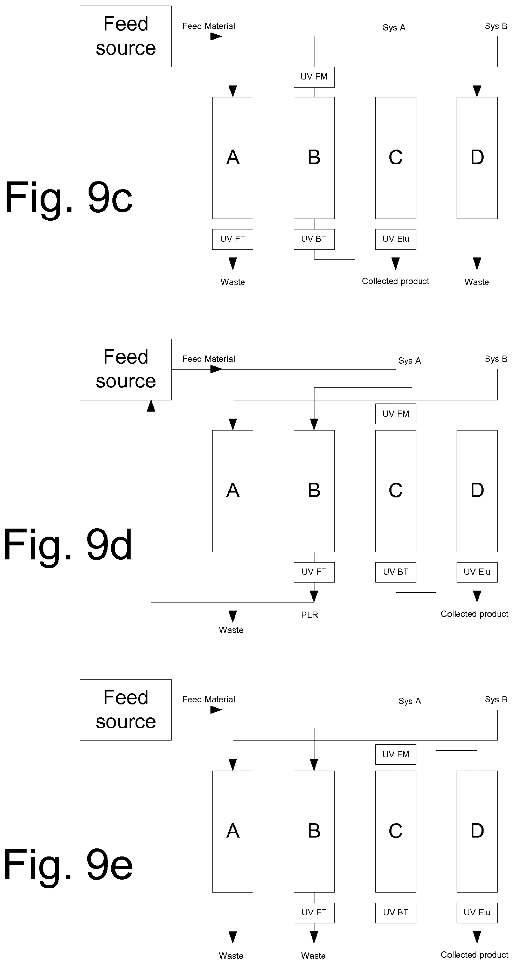

Figure 9c illustrates the second main step in the process. The difference between the PLR step described in connection with figure 9b is no circulation from the outlet of column A to the feed source.

Figure 9d illustrates the PLR step which commences when the second column is disconnected after a predetermined impurity breakthrough is detected, e.g. 10% BT.

Purging buffer "Sys A" is used to purge partly purified feed material from column B and pass it back to the feed source. The third column C is now loaded with feed material and the partly purified feed material from the third column C is subsequently passed onto the fourth column D for binding of impurities in the partly purified feed material. Purified material is collected from the fourth column D. The first column A is regenerated.

Figure 9e illustrates the third main step in the process. The difference between the PLR step described in connection with figure 9d is no circulation from the outlet of column B to the feed source.

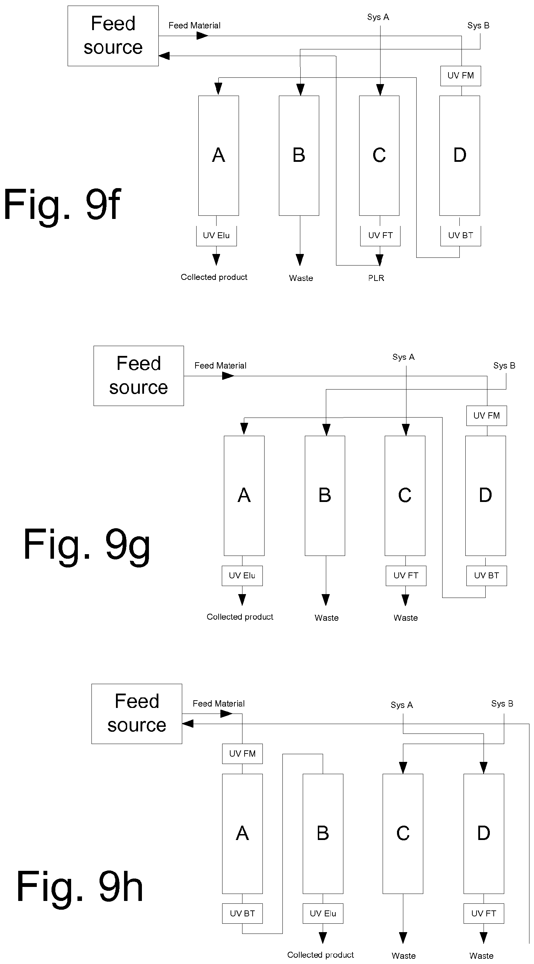

Figure 9f illustrates the PLR step which commences when the third column is disconnected after a predetermined impurity breakthrough is detected, e.g. 10% BT. Purging buffer "Sys A" is used to purge partly purified feed material from column C and pass it back to the feed source. The fourth column D is now loaded with feed material and the partly purified feed material from the fourth column D is subsequently passed onto the first column A for binding of impurities in the partly purified feed material. Purified material is collected from the first column A. The second column B is regenerated.

Figure 9g illustrates the fourth main step in the process. The difference between the PLR step described in connection with figure 9f is no circulation from the outlet of column C to the feed source.

Figure 9h illustrates the PLR step which commences when the fourth column is disconnected after a predetermined impurity breakthrough is detected, e.g. 10% BT.

Purging buffer "Sys A" is used to purge partly purified feed material from column D and pass it back to the feed source. The first column A is now loaded with feed material and the partly purified feed material from the first column A is subsequently passed onto the second column B for binding of impurities in the partly purified feed material. Purified material is collected from the second column B. The third column C is regenerated.

The process is thereafter repeated as illustrated in figure 9a.

Application examples for use with continuous chromatography flow-through mode, such as PCC, is suitable for efficient removal of impurities from feeds with target molecules such as viruses (e.g. Adeno, Lenti and Influenza virus) and viral vectors, virus like particles and plasmids.

The types of resins that can be used for these applications include, but are not limited to, lid type resins like Capto Core and the like, ion exchange resins and multimodal types of resins.

As an example, Capto Core 700 provides efficient capture of impurities while excluding target molecular entities which are sufficiently large from entering the pores of the beads.

Similarly, ion exchange (e.g. Capto Q.) and multimodal type of resins (e.g. Capto MMC and Capto S Adhere) can be used for removal of impurities.

Continuous chromatography in flow-through mode is similarly suitable for efficient removal of impurities from e.g. monoclonal antibodies, recombinant proteins, plasma proteins and other proteins.

Suitable applications include polishing steps for e.g. monoclonal antibodies using multimodal type resins such as Capto S Adhere.

Potential resins also include other Capto Core type resins, which exclude the target molecule from entering the pores of the beads while capturing the impurities.

**Claims**

1. A flow-through chromatographic method for purifying a target product in a flow-through chromatography system comprising at least a first column loaded with feed material from a feed source, **characterized in that** the at least first column is purged after binding of impurities to produce purged material and wherein the purged material from the column is passed upstream of the at least one column to be re-purified.

2. The method according to claim 1, wherein said upstream passing of the purged material is passing to the feed source.

3. The method according to claim 1 or 2 further including the steps of:

   - providing an outlet sensor arranged downstream of at least the first column;
   - loading the first column with feed material from the feed source,
   - detecting impurity breakthrough based on a signal detected by the outlet sensor of the first column,
   - when a predetermined impurity breakthrough is detected, disconnecting the first column from the feed source,
   - purging partly purified feed material from the first column using a purging buffer, and
   - passing the purged partly purified feed material to the feed source.

4. The method according to claim 3, wherein the or each outlet sensor is a UV sensor and the predetermined impurity breakthrough corresponds to a predetermined percentage of impurities in a target product downstream of the or each column.

5. The method according to claim 4, wherein the predetermined percentage of impurities in the target product is about 1%, 10%, 20%, 50% or 70%.

6. The method according to claim 4 or 5, wherein a UV sensor is provided upstream of each column, and the method further comprises dynamically controlling the impurity breakthrough.

7. The method according to any of claims 3-6, wherein the flow-through chromatography system further comprises a second column, the method further comprising:

   - directing the feed material to the second column when disconnecting the first column from the feed source,
   - detecting impurity breakthrough based on a signal detected by the outlet sensor of the second column,
   - when a predetermined impurity breakthrough is detected by the sensor of the second column, disconnecting the second column from the feed source,
   - purging partly purified feed material from the second column using the purging buffer, and
   - passing the purged partly purified feed material from the second column to the feed source.

8. The method according to claim 7, wherein the method further comprises:

   - regenerating the first column after purging partly purified feed material from the first column using a regenerating buffer, and
   - directing the feed material to the first column when disconnecting the second column from the feed source.

9. The method according to any of claims 1-6, wherein the flow-through chromatography system is a continuous chromatography system comprising at least three chromatography columns, wherein at least partly purified feed material flow through the at least first column after binding of impurities and wherein the partly purified feed material from the first column is subsequently passed onto a second column for binding of impurities in the partly purified feed material.

10. The method according to any of claims 7-9, wherein the method comprises loading each column in the flow-through chromatography system consecutively.

11. A flow-through chromatography system for purifying a target product, the system comprising at least a first column (81) loaded or loadable with feed material from a feed source, and a valve system (25) wherein the valve system (25) of the flow-through chromatography system is configured:

- to purge the at least first column (81) after binding of impurities, and
- to pass purged material from the outlet (24) of the first column upstream of the first column to be re-purified.

12. The flow-through chromatography system according to claim 11, wherein the flow-through chromatography system is configured to pass purged material to the feed source (84).

13. The flow-through chromatography system according to claim 11 or 12, wherein the flow-through chromatography system is a continuous chromatography system comprising at least three chromatography columns (A,B,C-N), and wherein the flow-through chromatography system is further configured:

- to flow at least partly purified feed material through the first of the columns after binding of impurities and,
- to pass the partly purified feed material from the first column subsequently onto a second of the columns for binding of impurities in the partly purified feed material.

14. The flow-through chromatography system according to claim 13, wherein the flow-through chromatography system is further configured to consecutively load each column.


**Patentansprüche**

1. Durchflusschromatographieverfahren zur Reinigung eines Zielprodukts in einem Durchflusschromatographiesystem, das mindestens eine erste Säule umfasst, die mit Zufuhrmaterial aus einer Zufuhrquelle beladen ist, **dadurch gekennzeichnet, dass** die mindestens erste Säule nach dem Binden von Verunreinigungen gespült wird, um gespültes Material zu erzeugen, und wobei das aus der Säule gespülte Material stromaufwärts der mindestens einen Säule weitergeleitet wird, um erneut gereinigt zu werden.

2. Verfahren nach Anspruch 1, wobei das stromaufwärtige Weiterleiten des gespülten Materials das Weiterleiten zur Zufuhrquelle ist.

3. Verfahren nach Anspruch 1 oder 2, das weiter die folgende Schritte beinhaltet:

- Bereitstellen eines Auslasssensors, der stromabwärts von mindestens der ersten Säule angeordnet ist;
- Beladen der ersten Säule mit Zufuhrmaterial aus der Zufuhrquelle,
- Detektieren eines Durchbruchs von Verunreinigungen basierend auf einem Signal, das vom Auslasssensor der ersten Säule detektiert wird,
- wenn ein vorbestimmter Durchbruch von Verunreinigungen detektiert wird, Trennen der ersten Säule von der Zufuhrquelle,
- Spülen von teilweise gereinigtem Zufuhrmaterial aus der ersten Säule unter Verwendung eines Spülpuffers und
- Weiterleiten des gespülten, teilweise gereinigten Zufuhrmaterials zur Zufuhrquelle.

4. Verfahren nach Anspruch 3, wobei der oder jeder Auslasssensor ein UV-Sensor ist und der vorbestimmte Durchbruch von Verunreinigungen einem vorbestimmten Prozentsatz an Verunreinigungen in einem Zielprodukt stromabwärts der oder jeder Säule entspricht.

5. Verfahren nach Anspruch 4, wobei der vorbestimmte Prozentsatz an Verunreinigungen im Zielprodukt etwa 1 %, 10 %, 20%, 50 % oder 70 % beträgt.

6. Verfahren nach Anspruch 4 oder 5, wobei stromaufwärts jeder Säule ein UV-Sensor bereitgestellt ist und das Verfahren weiter dynamisches Steuern des Durchbruchs von Verunreinigungen umfasst.

**7.** Verfahren nach einem der Ansprüche 3-6, wobei das Durchflusschromatographiesystem weiter eine zweite Säule umfasst, wobei das Verfahren weiter Folgendes umfasst:

- Leiten des Zufuhrmaterials zur zweiten Säule, wenn die erste Säule von der Zufuhrquelle getrennt wird,
- Detektieren eines Durchbruchs von Verunreinigungen basierend auf einem Signal, das vom Auslasssensor der zweiten Säule detektiert wird,
- wenn ein vorbestimmter Durchbruch von Verunreinigungen durch den Sensor der zweiten Säule detektiert wird, Trennen der zweiten Säule von der Zufuhrquelle,
- Spülen von teilweise gereinigtem Zufuhrmaterial aus der zweiten Säule unter Verwendung des Spülpuffers und
- Weiterleiten des gespülten, teilweise gereinigten Zufuhrmaterials von der zweiten Säule zur Zufuhrquelle.

**8.** Verfahren nach Anspruch 7, wobei das Verfahren weiter umfasst:

- Regenerieren der ersten Säule nach dem Spülen teilweise gereinigten Zufuhrmaterials aus der ersten Säule unter Verwendung eines Regenerierungspuffers und
- Leiten des Zufuhrmaterials zur ersten Säule, wenn die zweite Säule von der Zufuhrquelle getrennt wird.

**9.** Verfahren nach einem der Ansprüche 1-6, wobei das Durchflusschromatographiesystem ein kontinuierliches Chromatographiesystem ist, das mindestens drei Chromatographiesäulen umfasst, wobei mindestens teilweise gereinigtes Zufuhrmaterial nach dem Binden von Verunreinigungen durch die mindestens erste Säule fließt und wobei das teilweise gereinigte Zufuhrmaterial aus der ersten Säule anschließend zu einer zweiten Säule weitergeleitet wird, um Verunreinigungen im teilweise gereinigten Zufuhrmaterial zu binden.

**10.** Verfahren nach einem der Ansprüche 7-9, wobei das Verfahren das aufeinanderfolgende Laden jeder Säule im Durchflusschromatographiesystem umfasst.

**11.** Durchflusschromatographiesystem zum Reinigen eines Zielprodukts, wobei das System mindestens eine erste Säule (81), die mit Zufuhrmaterial aus einer Zufuhrquelle beladen oder beladbar ist, und ein Ventilsystem (25) umfasst, wobei das Ventilsystem (25) des Durchflusschromatographiesystems konfiguriert ist, um:

- die mindestens erste Säule (81) nach dem Binden von Verunreinigungen zu spülen und
- gespültes Material aus dem Auslass (24) der ersten Säule stromaufwärts der ersten Säule weiterzuleiten, um es erneut zu reinigen.

**12.** Durchflusschromatographiesystem nach Anspruch 11, wobei das Durchflusschromatographiesystem so konfiguriert ist, dass es gespültes Material zur Zufuhrquelle (84) weiterleitet.

**13.** Durchflusschromatographiesystem nach Anspruch 11 oder 12, wobei das Durchflusschromatographiesystem ein kontinuierliches Chromatographiesystem ist, das mindestens drei Chromatographiesäulen (A, B, C-N) umfasst, und wobei das Durchflusschromatographiesystem weiter konfiguriert ist, um:

- zumindest teilweise gereinigtes Zufuhrmaterial nach dem Binden von Verunreinigungen durch die erste der Säulen fließen zu lassen und
- das teilweise gereinigte Zufuhrmaterial aus der ersten Säule anschließend zu einer zweiten der Säulen weiterzuleiten, um Verunreinigungen im teilweise gereinigten Zufuhrmaterial zu binden.

**14.** Durchflusschromatographiesystem nach Anspruch 13, wobei das Durchflusschromatographiesystem weiter konfiguriert ist, jede Säule nacheinander zu beladen.

**Revendications**

**1.** Procédé de chromatographie à flux continu pour purifier un produit cible dans un système de chromatographie à flux continu comprenant au moins une première colonne chargée avec un matériau d'alimentation provenant d'une source d'alimentation, **caractérisé en ce que** la au moins une première colonne est purgée après la liaison d'impuretés pour produire un matériau purgé et dans lequel le matériau purgé de la colonne passe en amont de la au moins une colonne à repurifier.

**2.** Procédé selon la revendication 1, dans lequel ledit passage en amont du matériau purgé passe à la source d'alimentation.

**3.** Procédé selon la revendication 1 ou 2 incluant en outre les étapes consistant à :

- fournir un capteur de sortie agencé en aval d'au moins la première colonne ;
- charger la première colonne avec le matériau d'alimentation provenant de la source d'alimentation,
- détecter une percée d'impuretés sur la base d'un signal détecté par le capteur de sortie de la première colonne,
- lorsqu'une percée d'impuretés prédéterminée est détectée, déconnecter la première colonne de la source d'alimentation,
- purger le matériau d'alimentation partiellement purifié de la première colonne à l'aide d'un tampon de purge, et
- faire passer le matériau d'alimentation partiellement purifié purgé à la source d'alimentation.

**4.** Procédé selon la revendication 3, dans lequel le ou chaque capteur de sortie est un capteur UV et la percée d'impuretés prédéterminée correspond à un pourcentage prédéterminé d'impuretés dans un produit cible en aval de la ou de chaque colonne.

**5.** Procédé selon la revendication 4, dans lequel le pourcentage prédéterminé d'impuretés dans le produit cible est d'environ 1 %, 10 %, 20 %, 50 % ou 70 %.

**6.** Procédé selon la revendication 4 ou 5, dans lequel un capteur UV est disposé en amont de chaque colonne et le procédé comprend en outre la commande dynamique de la percée d'impuretés.

**7.** Procédé selon l'une quelconque des revendications 3-6, dans lequel le système de chromatographie à flux continu comprend en outre une seconde colonne, le procédé comprenant en outre :

- l'orientation du matériau d'alimentation vers la seconde colonne lors de la désolidarisation de la première colonne de la source d'alimentation,
- la détection d'une percée d'impuretés sur la base d'un signal détecté par le capteur de sortie de la seconde colonne,
- lorsqu'une percée d'impuretés prédéterminée est détectée par le capteur de la seconde colonne, la désolidarisation de la seconde colonne de la source d'alimentation,
- la purge du matériau d'alimentation partiellement purifié de la seconde colonne à l'aide du tampon de purge et
- le passage du matériau d'alimentation partiellement purifié purgé de la seconde colonne à la source d'alimentation.

**8.** Procédé selon la revendication 7, dans lequel le procédé comprend en outre :

- la régénération de la première colonne après avoir purgé le matériau d'alimentation partiellement purifié de la première colonne à l'aide d'un tampon de régénération et
- l'orientation du matériau d'alimentation vers la première colonne lors de la désolidarisation de la seconde colonne de la source d'alimentation.

**9.** Procédé selon l'une quelconque des revendications 1-6, dans lequel le système de chromatographie à flux continu est un système de chromatographie continue comprenant au moins trois colonnes de chromatographie, dans lequel un matériau d'alimentation au moins partiellement purifié s'écoule à travers la au moins une première colonne après la liaison d'impuretés et dans lequel le matériau d'alimentation partiellement purifié de la première colonne est ensuite passé à une seconde colonne pour lier des impuretés dans le matériau d'alimentation partiellement purifié.

**10.** Procédé selon l'une quelconque des revendications 7-9, dans lequel le procédé comprend le chargement consécutif de chaque colonne dans le système de chromatographie à flux continu.

**11.** Système de chromatographie à flux continu pour purifier un produit cible, le système comprenant au moins une première colonne (81) chargée, ou pouvant être chargée, avec un matériau d'alimentation provenant d'une source d'alimentation et un système de vanne (25), dans lequel le système de vanne (25) du système de chromatographie à flux continu est configuré pour :

- purger la au moins une première colonne (81) après liaison d'impuretés et

- faire passer un matériau purgé depuis la sortie (24) de la première colonne en amont de la première colonne à repurifier.

12. Système de chromatographie à flux continu selon la revendication 11, dans lequel le système de chromatographie à flux continu est configuré pour faire passer un matériau purgé à la source d'alimentation (84).

13. Système de chromatographie à flux continu selon la revendication 11 ou 12, dans lequel le système de chromatographie à flux continu est un système de chromatographie continue comprenant au moins trois colonnes de chromatographie (A, B, C-N) et dans lequel le système de chromatographie à flux continu est en outre configuré pour :

- faire circuler un matériau d'alimentation au moins partiellement purifié à travers la première des colonnes après liaison d'impuretés et
- par la suite, faire passer le matériau d'alimentation partiellement purifié de la première colonne à une seconde des colonnes pour la liaison d'impuretés dans le matériau d'alimentation partiellement purifié.

14. Système de chromatographie à flux continu selon la revendication 13, dans lequel le système de chromatographie à flux continu est en outre configuré pour charger consécutivement chaque colonne.

Fig. 1

Fig. 2

Fig. 3a

Fig. 3b

Fig. 3c

Fig. 4a

Fig. 4b

Fig. 4c

Fig. 4d

Fig. 5

Fig. 6

Fig. 7a

Fig. 7b

Fig. 7c

90

| 84 Feed | 82 | 92 inlet valves | | 85 Buffers |

81 | 91

83 | 93 | 95

94 outlet valves

## Fig. 8

Product

Waste

96

Feed source — Feed Material

UV FM

Sys A | Sys B

A | B | C | D

UV BT | UV Elu | | UV FT

## Fig. 9a

Collected product | Waste | Waste

Feed source — Feed Material

Sys A | Sys B

UV FM

A | B | C | D

UV FT | UV BT | UV Elu

## Fig. 9b

PLC | Collected product | Waste

Fig. 9c

Fig. 9d

Fig. 9e

Feed source

Feed Material

Sys A

Sys B

UV FM

A   B   C   D

UV Elu   UV FT   UV BT

Collected product   Waste   PLR

Fig. 9f

Feed source

Feed Material

Sys A

Sys B

UV FM

A   B   C   D

UV Elu   UV FT   UV BT

Collected product   Waste   Waste

Fig. 9g

Feed source

Feed Material

Sys A

Sys B

UV FM

A   B   C   D

UV BT   UV Elu   UV FT

Collected product   Waste   Waste

Fig. 9h

**EP 3 585 495 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008153472 A1
- WO 2015144481 A1
- US 2016074775 A1